# EUROPEAN PATENT SPECIFICATION

(11) **EP 4 216 073 B1**
(45) Date of publication and mention of the grant of the patent: **21.05.2025**
(21) Application number: 21871150.5
(22) Date of filing: 18.08.2021
(51) Int. Cl.: G06F 16/21, G06F 11/34, G06N 20/00

(54) **DATA MANAGEMENT METHOD, DATA MANAGEMENT APPARATUS, AND STORAGE MEDIUM**
DATENVERWALTUNGSVERFAHREN, DATENVERWALTUNGSVORRICHTUNG UND SPEICHERMEDIUM
PROCÉDÉ DE GESTION DE DONNÉES, APPAREIL DE GESTION DE DONNÉES ET SUPPORT DE STOCKAGE

(30) Priority: 22.09.2020 CN 202011002790
(43) Date of publication of application: 26.07.2023
(73) Proprietor: ZTE Corporation, Shenzhen, Guangdong 518057 (CN)
(72) Inventor: ZHENG, Xingquan, Shenzhen, Guangdong 518057 (CN); WANG, Aijun, Shenzhen, Guangdong 518057 (CN); YU, Zhen, Shenzhen, Guangdong 518057 (CN)
(74) Representative: Zoli, Filippo
(86) International application number: PCT/CN2021/113294
(87) International publication number: WO 2022/062777

(56) References cited:
- CN-A- 108 334 521
- CN-A- 110 188 086
- CN-A- 110 457 287
- CN-A- 110 457 287
- CN-A- 110 537 175
- CN-A- 110 851 333
- CN-A- 110 941 602
- CN-A- 110 941 620
- US-A1- 2018 314 735
- HILPRECHT BENJAMIN BENJAMIN HILPRECHT@CS TU-DARMSTADT DE ET AL: "Learning a Partitioning Advisor for Cloud Databases", PROCEEDINGS OF THE 27TH ANNUAL INTERNATIONAL CONFERENCE ON MOBILE COMPUTING AND NETWORKING, ACM, NEW YORK, NY, USA, 11 June 2020 (2020-06-11), pages 143 - 157, XP058751701, ISBN: 978-1-4503-8342-4, DOI: 10.1145/3318464.3389704

## Description

### TECHNICAL FIELD

The present application relates to the technical field of database management, in particular to a method and a device for data management, a storage medium.

### BACKGROUND

With the large-scale commercialization of the 5G network, the popularization of mobile Internet, the sharp drop in data communication cost, and the emergence of various low-cost sensing technologies and smart devices, real-time data are continuously generated from smart bracelets, sharing bikes, taxis, smart meters, elevators and equipment on industrial production lines, in addition to data in real-time that is collected and generated by traditional mobile phones and computers. Massive parallel processing database (MPPDB) can be utilized to manage these massive data conveniently.

In some cases, the database administrator needs to regularly analyze the disk space status of MPPDB to maintain the normal operation of MPPDB under the condition of limited disk space. However, it is not possible for the database administrator to know: the user's query behavior, which data can be deleted due to expiration, which data cannot be deleted, and which data needs to be indexed to expedite the user's query. And the MPPDB can only be managed according to human determination. Therefore, it is important to improve the disk space management technology for the MPPDB at present.

Publication (HILPRECHT BENJAMIN BENJAMIN HILPRECHT@CS TU-DARMSTADT DE ET AL: "Learning a Partitioning Advisor for Cloud Databases", PROCEEDINGS OF THE 27TH ANNUAL INTERNATIONAL CONFERENCE ON MOBILE COMPUTING AND NETWORKING, ACM, NEW YORK, NY, USA, 11 June 2020 (2020-06-11), pages 143-157, XP058751701, DOI: 10.1145/3318464.3389704, ISBN: 978-1-4503-8342-4) proposes a different route and make the case to use Deep Reinforcement Learning (DRL) to realize a cloud partitioning advisor as a service that can be used for internal and external DBMS solutions.

While the above publication may achieve its intended purposes, there is still a need for a new and improved a method for data management.

### SUMMARY

The object of the invention is solved by the features of the independent claims. Further embodiments are the subject-matter of the dependent claims.

The following is a summary of the subject matter described herein. This summary is not intended to limit the scope of protection of the claims.

Provided are a method and a device for data management, and a storage medium in some embodiments of the present application.

According to an aspect of the present application, an embodiment provides a method for data management, which is applied to a massive parallel processing database (MPPDB), the method includes, acquiring query behavior information for the querying the MPPDB by a user, based on a query request from the user; the query behavior information includes a query granularity of the user; generating a storage prediction model by machine learning based on the query behavior information, and acquiring a predicted storage state of the MPPDB according to the storage prediction model; the predicted storage state includes a predicted amount of data to be written into the first storage partition; and adjusting a storage partition in the MPPDB based on the predicted storage state, which includes, creating a first storage partition in the MPPDB according to the predicted storage state; and determining a time range of the first storage partition according to a size of the predicted amount of data to be written into the first storage partition and the query granularity; where the query granularity is indicative of whether data in the time range of the first storage partition is to be frequently queried by the user; all data with time stamps within the time range are written into the first storage partition; and the time range of the first storage partition comprises a time that goes beyond a current time.

According to another aspect of the present application, an embodiment provides a device for data management, which includes at least one processor and a memory configured to communicate and connect with the at least one processor. The memory stores an instruction that is executable by the at least one processor which, when executed by the at least one processor, causes the at least one processor to carry out the method as described above.

According to yet another aspect of the present application, an embodiment of the present application provides a computer-readable storage medium, which stores a computer-executable instruction which, when executed by a processor, causes the processor to carry out the method as described above.

Other features and advantages of the present application will be illustrated in the following description, and in part will be apparent from the description, or may be understood by practicing the present application. The objects and other advantages of the present application can be achieved and obtained by the structure particularly set forth in the description, claims and drawings.

### BRIEF DESCRIPTION OF DRAWINGS

The drawings are intended to provide a further understanding of the technical scheme of the present application, and constitute a part of the specification, and they are intended to illustrate the technical scheme of the present application in conjunction with the embodiments of the present application, but are not intended to limit the technical scheme of the present application.
FIG. 1 depicts a flowchart showing a method for data management according to an embodiment of the present application;
FIG. 2 depicts a flowchart showing a method for data management according to another embodiment of the present application;
FIG. 3 depicts a flowchart showing a method for data management according to yet another embodiment of the present application;
FIG. 4 depicts a flowchart showing a method for data management according to yet another embodiment of the present application;
FIG. 5 depicts a flowchart showing a method for data management according to yet another embodiment of the present application;
FIG. 6 depicts a flowchart showing a method for data management according to yet another embodiment of the present application;
FIG. 7 depicts a flowchart showing a method for data management according to yet another embodiment of the present application;
FIG. 8 depicts a flowchart showing a method for data management according to yet another embodiment of the present application;
FIG. 9 is a schematic diagram showing storage partitions for dates according to an embodiment of the present application;
FIG. 10 is a schematic diagram showing storage partitions for dates according to another embodiment of the present application; and
FIG. 11 depicts a schematic diagram showing the device for data management according to an embodiment of the present application.

### DETAILED DESCRIPTION

The purpose, technical scheme and advantages of the present application will become apparent through the following description for various embodiments in conjunction with the drawings. It should be understood that the embodiments described here are intended for illustration but not limitation to the present application.

Provided are a method and a device for data management, and a storage medium in some embodiments of the present application. A storage prediction model is obtained by training based on the user's query behavior information through machine learning. The storage prediction model is utilized to predict the change of storage partition in a massive parallel processing database (MPPDB) according to the user's query habit. In this way, the storage partition of the MPPDB can be adjusted in advance, thus expediting the query of the user in the MPPDB.

Some embodiments of the present application will be further illustrated with reference to the drawings.

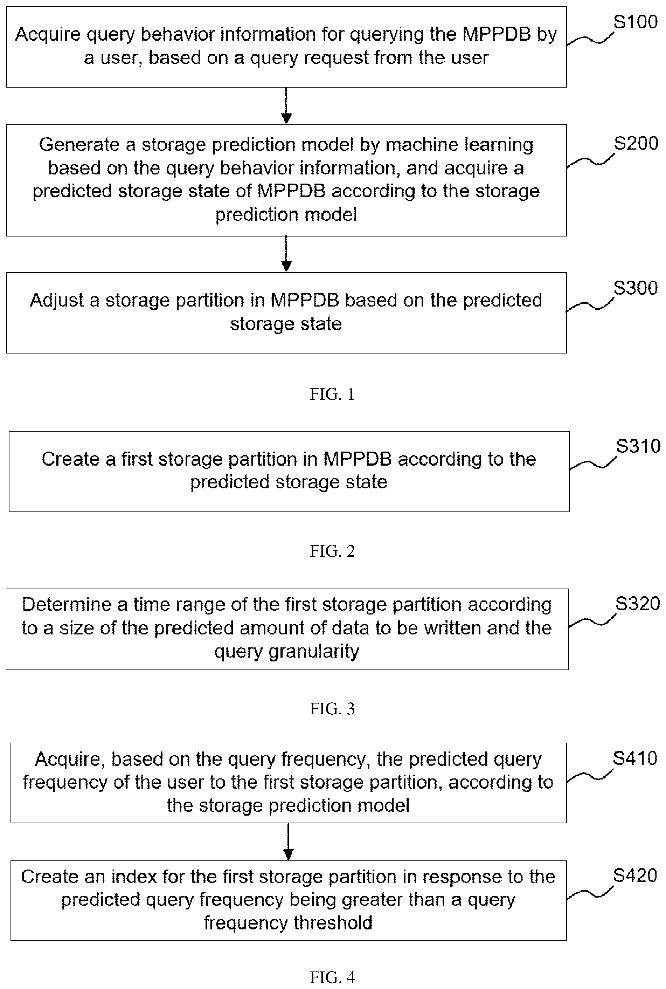

According to an aspect of the present application, there is provided a method for data management, which is applied to a massive parallel processing database (MPPDB). Referring to FIG. 1, the method includes but is not limited to the operations S100, S200, and S300.

At S 100, query behavior information for querying the MPPDB by a user is acquired based on a query request from the user.

MPPDB is intended to store structured data. The so-called structured data refers to data logically expressed and implemented through a two-dimensional table structure, which includes data generated by sensors, terminal devices, transaction systems, etc. The data generally exhibits (but is not limited to) the following features. Feature (1): The data is time-sequential and necessarily carries time stamps. Feature (2): The data has a retention period. Feature (3): Most of the data have geographical location information. Feature (4): The data is rarely updated or automatically deleted. Feature (5): The amount of data is huge, and the amount of data collected and reported in one day may exceed 10 million pieces. Feature (6): The query and analysis of the data are based on time period and geographical location information. Therefore, these data are stored in MPPDB in the form of two-dimensional table. In order to speed up the query, MPPDB divides the two-dimensional table to obtain multiple storage partitions. Each storage partition can be identified based on time period or geographical location information. When the database receives a query from a user, MPPDB initiates a query for several storage partitions in parallel based on the query method of the MPPDB itself, and finally summarizes the sub-result of the query of each storage partition and returns the results of the query to the user. In order to improve the accuracy of the query in the database, the query request from the user usually contains one or more pieces of information such as tables, partition information, index status, data volume, time span and geographical location involved in the query. In view of the foregoing, at S100 in this embodiment of the present application, various information contained in the user's query request is acquired. And the user's query behavior information about MPPDB can be obtained by analyzing various information from the user's query request, so as to provide feature information for the machine learning of this embodiment of the present application for model training. It can be understood that the above user query can be one or more query requests initiated by one or more users, and these query requests can be initiated by one or more client devices to MPPDB locally or through a network. The client can be any device that makes the query request, such as a terminal device like a computer, or a smartphone, etc.

At S200, a storage prediction model is generated by machine learning based on the query behavior information, and a predicted storage state of MPPDB is obtained according to the storage prediction model.

According to the characteristics of the data described above, with the passage of time, there will be more and more data in the database. However, the disk space (volume) of MPPDB is limited, so the database administrator needs to analyze the disk space status of the data regularly. If an anomaly occurs in the disk space occupation, it is necessary to manually adjust the data in the database. And it is not possible for the database administrator to accurately know the user's query behavior and manage the data in the database. In view of this, the user's query behavior information parsed and acquired at S100 is trained by means of a machine learning technique in an embodiment of the present application. And the correlation between the query behavior information and the storage mode of data in MPPDB is established, so as to obtain a storage prediction model, through which the storage state of data in the disk can be predicted, such as data writing amount, data query times, the effective time of data, location information and classification of data, etc. MPPDB automatically manages the data (or storage partition) in the database according to the predicted storage state obtained by the storage prediction model, so as to optimize the storage mode of data in MPPDB. It can be understood that the realization of the prediction training model by machine learning technique in an embodiment of the present application actually includes the process of characterizing the query behavior information. That is, the feature information suitable for the machine learning training model is extracted based on the user's query behavior, and the above-mentioned storage prediction model is acquired according to the feature information and the training model. It can be understood that the machine learning is based on one or more existing algorithms, such as decision tree algorithm, artificial neural network algorithm, deep learning, etc. These algorithms have been widely utilized in big data processing. The present application is not intended to focus on the algorithm selection, so further discussion regarding how the model training is achieved through algorithms will not be provided here.

At S300, a storage partition in MPPDB is adjusted based on the predicted storage state.

It can be understood that the data in the database can be automatically managed according to the predicted storage state. And it is possible to adjust the data (or storage partition) by calling the pre-stored optimization policy in MPPDB. Additionally or alternatively, it is possible to adjust the data (or storage partition) according to the real-time determination of the actual predicted storage state. The adjustment involved includes, but is not limited to the operations of, creating/deleting indexes of storage partitions, lowering the level of indexes, creating/deleting storage partitions, deleting expired data, etc. The adjustment will be further illustrated below. The above-mentioned adjustment process can be triggered according to the passage of time without the operations by database administrators, or through the query initiated by users, so as to optimize the data storage mode in MPPDB. Thereby the frequency of data loading is reduced and the query speed is improved. Through automatic adjustment, the disk occupancy rate of MPPDB can be maintained in a reasonable range, and the disk overhead can be reduced.

In an embodiment, referring to FIG. 2, S300 includes the following operation S310.

At S310, a first storage partition in MPPDB is created according to the predicted storage state.

As can be seen from the above description, the storage prediction model is configured to predict the change of data in MPPDB. Then, when the system time enters the next time point (for example, the system time comes to a new day) or when the user's query request is received, the storage prediction model predicts the disk space of MPPDB according to the time point or the user's query. For example, when the system time comes to a new day, and according to a prediction based on a previous amount of data written in, it is necessary to create a new storage partition in MPPDB to store the data to be written. Then, a time range is set for this newly created storage partition according to the amount of data to be written in (all data with time stamps within the set time range are written into this storage partition). By creating the first storage partition in advance, the delay caused by partition creation when new data is ready to be written can be prevented. It is worth noting that the time range of the first storage partition created in advance can go beyond the current time. That is, the storage partition with a future date is created under the current date, and new storage partitions are successively created as the date goes on, thus realizing the rapid storage of the reported data.

In an embodiment, referring to FIG. 3, the query behavior information at S200 includes the query granularity of the user, and the predicted storage state includes the predicted amount of data to be written into the first storage partition. On this basis, S300 further includes the following operation S320 in addition to S310.

At S320, a time range of the first storage partition is determined according to a size of the predicted amount of data to be written and the query granularity.

There are two main factors that determine the time range of the newly created first storage partition. The first factor is the query granularity of users' queries about data. That is, if the data in a certain time period is to be frequently queried by users, the first storage partition is created based on this time period (i.e., the time range), in order to expedite the query. In this way, MPPDB can quickly locate the first storage partition according to users' query habits, to provide rapid acquisition of the results of the query. The second factor is the predicted amount of data to be written. From the above, it can be seen that the amount of data sent to MPPDB is large, and a clear temporal feature is exhibited. That is, the amount of data reported in some time periods is larger than that in other time periods of a day. For example, the amount of data generated by smartphone terminals is very large from evening to late at night to the extent that the amount of data generated during that period even exceeds the amount of data reported during the rest time of the day. And the data in that night-time period is generally more valuable for analysis for enterprises. Consequently, the time range of the first storage partition is set based on that night-time period in order to facilitate enterprises/users to find and analyze the data in that period. And it is apparent that, the time range of the first storage partition can also be set directly according to one or more consecutive natural days, due to the small amount of data reported in other time periods in such a case. For example, the time range of the first storage partition is set to April 1, 2020.

In an embodiment, referring to FIG. 4, the query behavior information at S200 includes the query frequencies of users for queries in different storage partitions. Based on the first storage partition created at S310, the method for data management in an embodiment of the present application further includes operations S400 and S410.

At S400, based on the query frequency, the predicted query frequency of the user to the first storage partition is obtained according to the storage prediction model.

At S410, an index is created for the first storage partition in response to the predicted query frequency being greater than a query frequency threshold.

In this embodiment, based on the analysis of the query frequency of users for recent data, if a query frequency for some data in the first storage partition is higher than the query frequency threshold, it is considered the likelihood that the first storage partition will be frequently queried is rather high. In such a case, an index is created for the first storage partition in order to expedite the query for the first storage partition. An index in MPPDB is a structure that sorts the values of one or more columns in a database table. The index can quicken the access for particular information in a database table. That is, the index facilitates the rapid acquisition of information as compared to the search for the desired information in all rows of a table. It is worth noting that the query frequency threshold discussed in this embodiment is intended to identify whether the user's query reaches a frequent level. This threshold can be a frequency threshold manually set according to experience, or a frequency threshold generated by the storage prediction model according to the user's query behavior information.

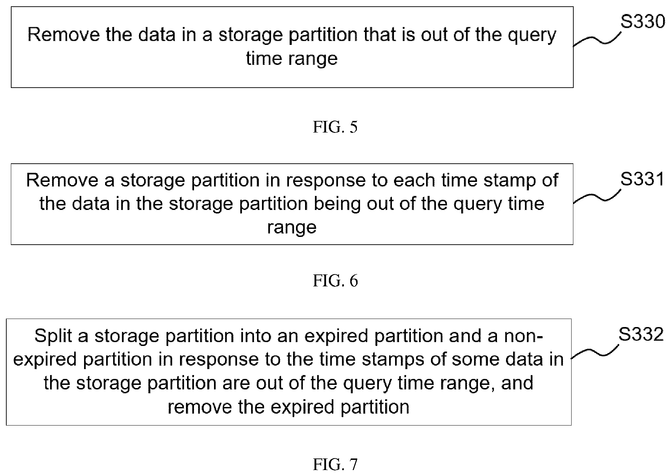

In an embodiment, referring to FIG. 5, the query behavior information at S200 includes the query time range for the user's query for data in MPPDB. Accordingly, S300 further includes the following operation S330.

At S330, the data in a storage partition with a time range that is out of the query time range, is removed.

In this embodiment, the expired data in MPPDB is processed. The expired data generally refers to discarded data with no value for query, such as the operating parameters of some old equipment after new equipment is introduced, call records from many years ago, etc. Enterprises/users will no longer query these data, so it is necessary for database administrators to manually find and delete these data. For example, some data with fast update frequency has no reference value after being generated for more than 30 days. And such data is beyond the query time range of enterprises/users. Therefore, the storage prediction model removes the data in the storage partition according to the query time range in the query behavior information, which can reduce the demand for storage space in MPPDB and avoid the lag of manual maintenance.

In an embodiment, referring to FIGS. 6 and 7, the above-described operation S330 further includes operation S331 or operation S332.

At S331, a storage partition is removed in response to each time stamp of the data in the storage partition being out of the query time range.

At S332, a storage partition is split into an expired partition and a non-expired partition in response to the time stamps of some data in the storage partition are out of the query time range, and the expired partition is removed, where the time stamp of each data in the expired partition is out of the query time range, and the time stamp of each data in the non-expiration partition is within the query time range.

S331 and S332 are two different strategies to remove data in the storage partition. Since different time ranges can be set in the storage partitions, and during the removal of data by time range, it is inevitable that some data in a storage partition are expired data and the rest are non-expired data (valid data). With the strategy of S331, a storage partition will not be removed until each data in the storage partition expires, such that, the operations made to the storage partition are reduced to some extent. And with the strategy of S332, the expired data, and non-expired data are split and stored into two storage partitions respectively. Only the storage partition with expired data is removed. And thus, the data can be removed in real-time to reduce the storage demand regardless of the time range of the original storage partition, but the operations to the storage partitions are more than that of S331.

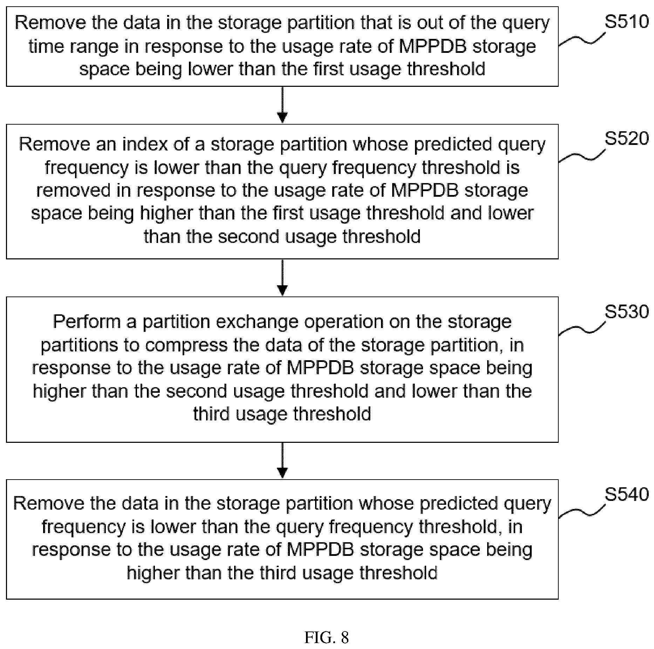

In an embodiment, referring to FIG. 8, the query behavior information at S200 includes the query frequency of user's query in different storage partitions and the query time range of user's query for data in MPPDB. Then, the method for data management in an embodiment of the present application further includes but is not limited to the following operations S510, S520, S530, and S540.

At S510, the data in the storage partition that is out of the query time range is removed in response to the usage rate of MPPDB storage space being lower than the first usage threshold.

At 520, an index of a storage partition whose predicted query frequency is lower than the query frequency threshold is removed in response to the usage rate of MPPDB storage space being higher than the first usage threshold and lower than the second usage threshold.

At S530, a partition exchange operation is performed on the storage partitions to compress the data of the storage partition, in response to the usage rate of MPPDB storage space being higher than the second usage threshold and lower than the third usage threshold.

At S540, the data in the storage partition whose predicted query frequency is lower than the query frequency threshold is removed, in response to the usage rate of MPPDB storage space being higher than the third usage threshold.

This embodiment provides an optimization strategy for an autonomous multi-level feedback mechanism. Through S510 to S540, the disk space of MPPDB can be maintained autonomously. In an example, the first usage threshold is set to 25%, the second usage threshold is set to 50%, and the third usage threshold is set to 80%. When the disk usage rate of MPPDB is less than 25%, the data in the storage partition with the time range that exceeds the query time range is removed with the optimization strategy based on the autonomous multi-level feedback mechanism and according to the query time range, even if no user operation is made to MPPDB. For example, scanning is performed to the time of each storage partition of the disk to determine whether a storage partition that exceeds the query time range. If there is data in a storage partition that exceeds the query time range, the expired data or even the storage partition is removed. It can be understood that, the frequency for the scanning of the disk can be set as required. If the data is updated quickly and the granularity of the query time range is small, a small scanning frequency can be set. If the data is updated slowly and the granularity of the query time range is large, such as 60 days, a larger scanning frequency can be set, such as once a day. When the disk usage rate of MPPDB is higher than 25% and lower than 50%, the indexes of some storage partitions are removed. The partitions with indexes removed are those partitions to which users will not make frequent queries as inferred by the storage prediction model (that is, the partitions below the query frequency threshold). Since the indexes will also take some storage spaces, the indexes of storage partitions below the query frequency threshold can be removed, thus reducing the disk usage rate. When the disk usage rate of MPPDB is higher than 50% and lower than 80%, the disk usage rate will be reduced by partition exchange. The storage partitions will expand due to different degrees of data loading during the queries. In such a case, the data in the expanded partition can be compressed by partition exchange, thus reducing the disk usage rate. When the disk usage of MPPDB is higher than 80%, it is considered that the disk usage rate is relatively high in such a case. And thus, more aggressive means are needed to deal with the data. In this embodiment, all the data that users do not frequently query are removed, and only the data that users frequently query are kept, thus greatly reducing the amount of data in the disk. It can be understood that the above-described usage thresholds can be set according to actual needs, and the optimization strategy corresponding to the ranges formed by each usage threshold can also be set according to needs. This embodiment is only illustrative with some examples, that the above-described optimization strategy can reduce the disk usage, ensure that the MPPDB system is in an available state, and provide better query service for users.

In an embodiment, the generation of the storage prediction model by machine learning at S200 includes the operations of, taking the query behavior information as a training set, and training the query behavior information by machine learning based on the stacking method to obtain the storage prediction model.

In order to ensure the accuracy and robustness of the storage prediction model, the training model is trained by the stacking training method. The existing methods are prone to inconsistent verification errors and test errors in practical applications. The reasons for the inconsistency are over-fitting and concept drift, and the strong correlation of the basic classifier model. For example, in the user's query behavior information, the query frequency is often related to the attributes of the query object, that is, the attributes that users are mainly concerned about tend to be frequently queried. In order to solve this problem, a robust system with consistent verification and test performance is trained by multi-level stacking technique. An embodiment of the present application provides a schematic diagram of a two-level stacking technique. The training data is divided into five layers, and five different models are trained based on the leave-one-out method strategy. The leave-one-out method strategy utilizes one of the five layers of data in the training data for prediction, and the other four layers are utilized for training. The trained models are further applied to a test, and a prediction is produced for each model. In order to predict the test data, the average value of each group of prediction scores of each model is determined, and the average value of five groups of prediction scores constitutes the sixth model. Then, the five prediction scores are regarded as new training data on the test data, and the new training and test data set of the prediction model is utilized to generate the final result, i.e., the storage prediction model. The advantage of the stacking method is that over-fitting caused by cross-validation in traditional training methods is avoided, and the nonlinearity between features caused by taking output as features is reasoned.

According to the above embodiment, based on the user's behavior habit of querying data in MPPDB and the current data circulation and storage state of the database, the storage prediction model is established through machine learning, and the disk space of MPPDB is automatically managed according to the storage prediction model. In this way, the data storage mode is optimized. An embodiment of the application can obtain more accurate analysis results, and further reduce disk consumption, as compared to the manual analysis and management by the database administrator.

An embodiment of the present application will be illustrated by way of an example below.

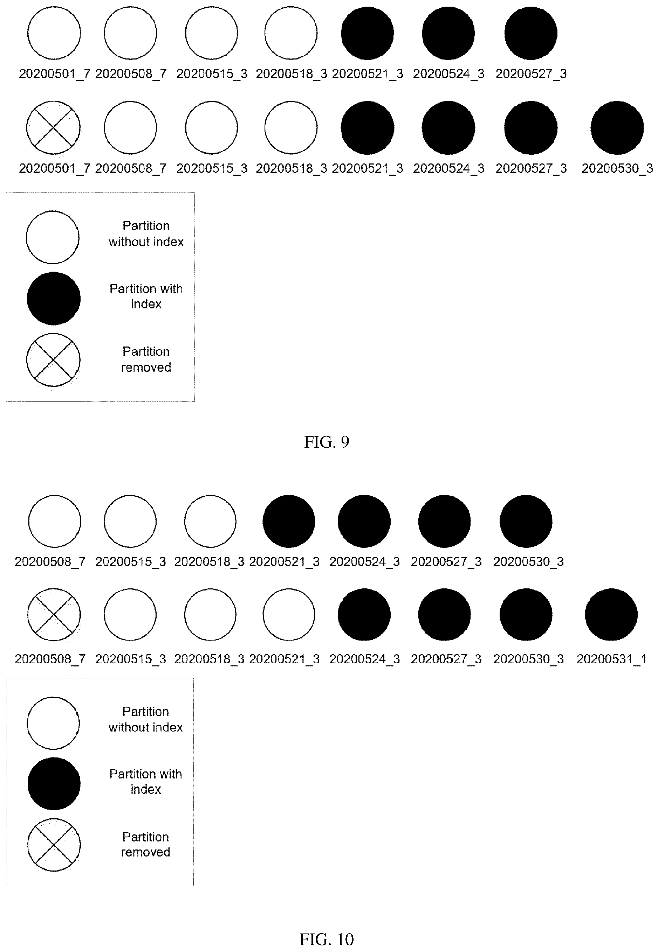

Referring to FIG. 9, the target table of a specific measurement object includes seven storage partitions: "20200501_7", "20200508_7", "20200515_3", "20200518_3", "20200521_3", "20200524_3" and "20200527_3" (in this example, the storage partition is named with the format, date_days). And it is assumed that users often query the data of the last week in MPPDB (that is, the data range greater than the query frequency threshold is the data of the last week from the current time), and that users only query the data of the last three weeks from the current time (that is, the query time range is three weeks). Suppose the current time is May 27th, 2020, and the storage prediction model learns from the user's query behavior information that the user will frequently query the data of the last week from the current time. Also, it is known that the data reported by MPPDB in the next few days is moderate. In such a case, a new partition "20200530_3" is automatically created, and an index is created for the partition "20200530_3" at the same time. On the other hand, partition "20200501_7" is removed since partition "20200501_7" (i.e., the partition is created on May 1, 2020) is out of the query time range of three weeks (21 days) from the current time. Referring to FIG. 10, as time goes by, the date comes to May 30, 2020. According to the previous user's query behavior habits, the data of the last week from the current time will still be frequently queried, but the amount of data reported on the last day of the month is very large. In view of this, a new partition "20200531_1" is created together with the index of this partition. At the same time, the index in the storage partition "20200521_3" is removed since the storage partition "20200521_3" (which is created on May 21, 2020) is out of the query time range of one week. By creating a storage partition with a time range of 1 day, only the data within May 31 is stored, thus providing fine-grained queries for users, which are faster and more reliable. The above-described time range for creating a new partition needs to refer to several dimensions in the actual situation. For example, the data in different areas have different data attributes. In the area divided based on coverage regions of base stations, the data in the current area is reported at a granularity of 15 minutes and kept for 30 days. In the area covered by another base station adjacent to the current area, since the coverage regions of the adjacent two base stations overlap, the data in the adjacent area may overlap with those in the current area, so that, the data from the adjacent area is reported at a granularity of 15 minutes but is kept for 7 days only.

According to another aspect of the present application, an embodiment provides a device for data management, which includes at least one processor and a memory configured to communicate and connect with the at least one processor. The memory stores an instruction that is executable by the at least one processor which, when executed by the at least one processor, causes the at least one processor to carry out the method as described above.

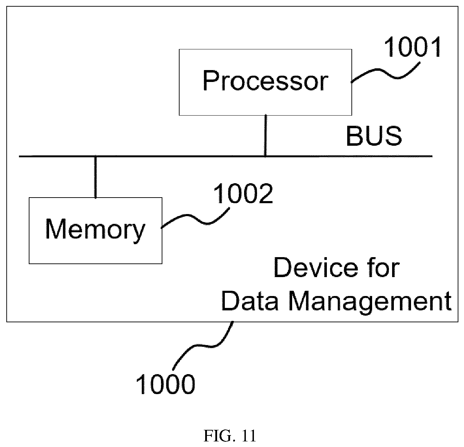

Referring to FIG. 11, the control processor 1001 and the memory 1002 in the device for data management 1000 can be connected for example, through a bus. As a non-transitory computer-readable storage medium, the memory 1002 can be configured to store non-transitory software programs and non-transitory computer-executable programs. In addition, the memory 1002 can include high-speed random-access memory and non-transitory memory, such as at least one disk memory device, flash memory device, or other non-transitory solid-state memory devices. In some implementations, the memory 1002 can include memories remotely located relative to the control processor 1001, and these remote memories may be connected to the device for data management 1000 through a network. Examples of the above networks include, but are not limited to, the Internet, intranet, local area network, mobile communication network, and combinations thereof.

It can be understood by those having ordinary skills in the art that the device shown in FIG. 11 does not constitute a limitation to the device for data management 1000 which may include more or less components than those shown, or some components may be combined, or have different component arrangements.

The device for data management, by carrying out of the method as described above, and based on the user's behavior habit of querying data in MPPDB and the current data circulation and storage state of the database, the storage prediction model is established through machine learning, and the disk space of MPPDB is automatically managed according to the storage prediction model. In this way, the data storage mode is optimized. An embodiment of the application can obtain more accurate analysis results, and further reduce disk consumption, as compared to the manual analysis and management by the database administrator.

According to yet another aspect of the present application, there is provided a computer-readable storage medium, which stores computer-executable instructions which, when executed by at least one control processor, e.g., the control processor 1001 shown in FIG. 11, causes the control processor to carry out the operations of the method described above, for example, the above-described operations S100 to S300 described in conjunction with FIG. 1, S310 described in conjunction with FIG. 2, S320 described in conjunction with FIG. 3, S410 to S420 described in conjunction with FIG. 4, S330 described in conjunction with FIG. 5, S331 described in conjunction with FIG.6, S332 described in conjunction with FIG. 7, or S510 to S540 described in conjunction with FIG. 8.

According to the method and the device for data management, and the storage medium according to some embodiments of the present application, the storage prediction model of MPPDB data is obtained by training through machine learning based on the user's query behavior of MPPDB. The change of data in MPPDB is predicted according to the storage prediction model, so that the storage partitions are optimized and adjusted in advance. The query speed of MPPDB is improved, the query and analysis requirements of users are better met, and the cost of storage resources for MPPDB is also reduced.

The above-described device embodiments are only illustrative, in which the units illustrated as separate components may or may not be physically separated, that is, they may be located in one place or distributed over several network units. Some or all of the modules can be selected according to the practical needs to achieve the purpose of this embodiment.

It shall be appreciated by a person having ordinary skills in the art that all or some of the steps and systems disclosed above can be implemented as software, firmware, hardware and their appropriate combinations. Some or all physical components can be implemented as software executed by a processor, such as a central processing unit, a digital signal processor or a microprocessor, or as hardware, or as an integrated circuit, such as an application-specific integrated circuit. Such software can be distributed on computer-readable media, which can include computer storage media (or non-transitory media) and communication media (or transitory media). As is well known to a person having ordinary skills in the art, the term computer storage medium includes volatile and nonvolatile, removable and non-removable medium implemented in any method or technology for storing information such as computer-readable instructions, data structures, program modules or other data. Computer storage medium includes, but is not limited to, RAM, ROM, EEPROM, flash memory or other memory technologies, CD-ROM, digital versatile disks (DVD) or other optical disk storage, magnetic boxes, tapes, magnetic disk storage or other magnetic storage devices, or any other medium that can be configured to store desired information and accessible by a computer. Furthermore, it is well known to those having ordinary skills in the art that communication media usually contains computer-readable instructions, data structures, program modules or other data in modulated data signals such as carrier waves or other transmission mechanisms, and can include any information delivery media.

Described above is a description of some embodiments of the present application, but the present application is not limited to the above embodiments. Those having ordinary skills in the art can make various modifications or substitutions without departing the scope of the present application, and these modifications or substitutions are within the scope defined by the claims of the present application.

## Claims

1. A method for data management, which is applied to a massive parallel processing database, MPPDB, the method comprising,
acquiring query behavior information for querying the MPPDB by a user, based on a query request from the user (S100); the query behavior information comprising a query granularity of the user;
generating a storage prediction model by machine learning based on the query behavior information, and acquiring a predicted storage state of the MPPDB according to the storage prediction model (S200); the predicted storage state comprising a predicted amount of data to be written into the first storage partition; and
**characterized in that**, the method further comprises,
adjusting a storage partition in the MPPDB based on the predicted storage state (S300), comprising,
creating a first storage partition in the MPPDB according to the predicted storage state (S310); and
determining a time range of the first storage partition according to a size of the predicted amount of data to be written into the first storage partition and the query granularity (S320);
wherein, the query granularity is indicative of whether data in the time range is to be frequently queried by the user; all data with time stamps within the time range of the first storage partition are written into the first storage partition; and the time range of the first storage partition comprises a time that goes beyond a current time.

2. The method according to claim 1, wherein the query behavior information comprises query frequencies of the user for querying different storage partitions; and
the method further comprises,
acquiring a predicted query frequency of the user to the first storage partition based on the query frequencies, and according to the storage prediction model (S410); and
creating an index for the first storage partition in response to the predicted query frequency being greater than a query frequency threshold (S420);
wherein, the query frequency is indicative of a frequency of data query by the user.

3. The method according to claim 1, wherein the query behavior information comprises a query time range for the user to query data in the MPPDB; and
adjusting the storage partition in the MPPDB based on the predicted storage state (S300) comprises,
removing data in a storage partition that is out of the query time range (S330).

4. The method according to claim 3, wherein removing the data in the storage partition that is out of the query time range (S330) comprises one of,
removing the storage partition in response to each time stamp of data in the storage partition being out of the query time range (S331); or
splitting the storage partition into an expired partition and a non-expired partition, in response to each time stamp of a part of data in the storage partition being out of the query time range, and removing the expired partition (S332), wherein each time stamp of the data in the expired partition is out of the query time range, and each time stamp of the data in the non-expired partition is within the query time range.

5. The method according to claim 1, wherein the query behavior information comprises query frequencies of the user for querying different storage partitions and a query time range for the user to query data in the MPPDB; and
the method further comprises,
removing data in a storage partition that is out of the query time range, in response to a usage rate of storage space of the MPPDB being lower than a first usage threshold (S510);
removing an index of a storage partition whose predicted query frequency is lower than the query frequency threshold, in response to the usage rate of storage space of the MPPDB being higher than the first usage threshold and lower than a second usage threshold (S520);
performing a partition exchange operation on a storage partition to compress data of the storage partition, in response to the usage rate of storage space of the MPPDB being higher than the second usage threshold and lower than a third usage threshold (S530); and
removing data in a storage partition whose predicted query frequency is lower than the query frequency threshold, in response to the usage rate of storage space of the MPPDB being higher than the third usage threshold (S540).

6. The method according to claim 5, further comprising performing the partition exchange operation to a storage partition with data expansion, and wherein, performing the partition exchange operation to the storage partition with data expansion comprises,
creating a second storage partition, and copying each data of the storage partition with data expansion to the second storage partition and compressing the data; and
updating partition association information of the MPPDB, and removing the storage partition with data expansion.

7. The method according to claim 1, wherein generating the storage prediction model by machine learning comprises:
taking the query behavior information as a training set, and training the query behavior information by machine learning based on a stacking method to acquire the storage prediction model.

8. A device for data management comprising at least one processor (1001) and a memory (1002) configured to communicate and connect with the at least one processor (1001); wherein the memory (1002) stores an instruction executable by the at least one processor (1001) which, when executed by the at least one processor (1001), causes the at least one processor (1001) to carry out the method of any one of claim 1 to claim 7.

9. A computer-readable storage medium storing a computer-executable instruction which, when executed by a processor, causes the processor to carry out the method of any one of claim 1 to claim 7.

10. A computer program comprising instructions which, when the program is executed by a computer, cause the computer to carry out the method of any of claim 1 to claim 7.

## Patentansprüche

1. Datenverwaltungsverfahren, das auf eine Massive Parallel Processing Database, MPPDB, angewendet wird, das Verfahren umfassend,
Erfassen von Abfrageverhaltensinformationen zum Abfragen der MPPDB durch einen Benutzer, basierend auf einer Abfrageanforderung von dem Benutzer (S100); die Abfrageverhaltensinformationen umfassend eine Abfragegranularität des Benutzers;
Erzeugen eines Speichervorhersagemodells durch maschinelles Lernen basierend auf den Abfrageverhaltensinformationen, und Erfassen eines vorhergesagten Speicherzustands der MPPDB gemäß dem Speichervorhersagemodell (S200); der vorhergesagte Speicherzustand umfassend eine vorhergesagte Datenmenge, die in die erste Speicherpartition geschrieben werden soll; und **dadurch gekennzeichnet, dass** das Verfahren ferner Folgendes umfasst
Einstellen einer Speicherpartition in der MPPDB basierend auf dem vorhergesagten Speicherzustand (S300), umfassend
Erstellen einer ersten Speicherpartition in der MPPDB gemäß dem vorhergesagten Speicherzustand (S310); und
Bestimmen eines Zeitbereichs der ersten Speicherpartition gemäß einer Größe der vorhergesagten Datenmenge, die in die erste Speicherpartition geschrieben werden soll, und der Abfragegranularität (S320);
wobei die Abfragegranularität indikativ dafür ist, ob Daten in dem Zeitbereich häufig von dem Benutzer abgefragt werden sollen; alle Daten mit Zeitstempeln innerhalb des Zeitbereichs der ersten Speicherpartition in die erste Speicherpartition geschrieben werden; und der Zeitbereich der ersten Speicherpartition eine Zeit umfasst, die über eine aktuelle Zeit hinausgeht.

2. Verfahren nach Anspruch 1, wobei die Abfrageverhaltensinformationen Abfragehäufigkeiten des Benutzers zum Abfragen verschiedener Speicherpartitionen umfassen; und
wobei das Verfahren ferner Folgendes umfasst
Erfassen einer vorhergesagten Abfragehäufigkeit des Benutzers an die erste Speicherpartition basierend auf den Abfragehäufigkeiten und gemäß dem Speichervorhersagemodell (S410); und
Erstellen eines Index für die erste Speicherpartition als Reaktion darauf, dass die vorhergesagte Abfragehäufigkeit größer ist als ein Abfragehäufigkeitsschwellenwert (S420);
wobei die Abfragehäufigkeit indikativ für eine Häufigkeit von Datenabfrage durch den Benutzer ist.

3. Verfahren nach Anspruch 1, wobei die Abfrageverhaltensinformationen einen Abfragezeitbereich für den Benutzer zum Abfragen von Daten in der MPPDB umfassen; und
wobei ein Anpassen der Speicherpartition in der MPPDB basierend auf dem vorhergesagten Speicherzustand (S300) Folgendes umfasst
Entfernen von Daten in einer Speicherpartition, die außerhalb des Abfragezeitbereichs sind (S330).

4. Verfahren nach Anspruch 3, wobei das Entfernen der Daten in der Speicherpartition, die außerhalb des Abfragezeitbereichs sind (S330), eines von Folgenden umfasst
Entfernen der Speicherpartition als Reaktion darauf, dass jeder Zeitstempel von Daten in der Speicherpartition außerhalb des Abfragezeitbereichs ist (S331); oder
Aufteilen der Speicherpartition in eine abgelaufene Partition und eine nicht abgelaufene Partition als Reaktion darauf, dass jeder Zeitstempel eines Teils von Daten in der Speicherpartition außerhalb des Abfragezeitbereichs ist, und Entfernen der abgelaufenen Partition (S332), wobei jeder Zeitstempel der Daten in der abgelaufenen Partition außerhalb des Abfragezeitbereichs ist, und jeder Zeitstempel der Daten in der nicht abgelaufenen Partition innerhalb des Abfragezeitbereichs ist.

5. Verfahren nach Anspruch 1, wobei die Abfrageverhaltensinformationen Abfragehäufigkeiten des Benutzers zum Abfragen verschiedener Speicherpartitionen und einen Abfragezeitbereich für den Benutzer zum Abfragen von Daten in der MPPDB umfassen; und das Verfahren ferner Folgendes umfasst
Entfernen von Daten in einer Speicherpartition, die außerhalb des Abfragezeitbereichs ist, als Reaktion darauf, dass eine Nutzungsrate von Speicherplatz der MPPDB niedriger als ein erster Nutzungsschwellenwert ist (S510);
Entfernen eines Indexes einer Speicherpartition, deren vorhergesagte Abfragehäufigkeit niedriger ist als der Abfragehäufigkeitsschwellenwert, als Reaktion darauf, dass die Nutzungsrate des Speicherplatzes der MPPDB höher als der erste Nutzungsschwellenwert und niedriger als ein zweiter Nutzungsschwellenwert ist (S520);
Durchführen eines Partitionsaustauschvorgangs an einer Speicherpartition, um Daten der Speicherpartition zu komprimieren, als Reaktion darauf, dass die Nutzungsrate des Speicherplatzes der MPPDB höher als der zweite Nutzungsschwellenwert und niedriger als ein dritter Nutzungsschwellenwert ist (S530); und
Entfernen von Daten in einer Speicherpartition, deren vorhergesagte Abfragehäufigkeit niedriger ist als der Abfragehäufigkeitsschwellenwert, als Reaktion darauf, dass die Nutzungsrate des Speicherplatzes der MPPDB höher ist als der dritte Nutzungsschwellenwert (S540).

6. Verfahren nach Anspruch 5, ferner umfassend ein Durchführen des Partitionsaustauschvorgangs mit einer Speicherpartition mit Datenexpansion, und wobei ein Durchführen des Partitionsaustauschvorgangs mit der Speicherpartition mit Datenexpansion Folgendes umfasst
Erstellen einer zweiten Speicherpartition und Kopieren aller Daten der Speicherpartition mit Datenexpansion in die zweite Speicherpartition und Komprimieren der Daten; und Aktualisieren der Partitionszuordnungsinformationen der MPPDB und Entfernen der Speicherpartition mit Datenexpansion.

7. Verfahren nach Anspruch 1, wobei ein Erzeugen des Speichervorhersagemodells durch maschinelles Lernen Folgendes umfasst:
Nehmen der Abfrageverhaltensinformationen als Trainingssatz und Trainieren der Abfrageverhaltensinformationen durch maschinelles Lernen basierend auf einem Stapelungsverfahren, um das Speichervorhersagemodell zu erfassen.

8. Datenverwaltungsvorrichtung, umfassend mindestens einen Prozessor (1001) und einen Speicher (1002), der konfiguriert ist, um mit dem mindestens einen Prozessor (1001) zu kommunizieren und verbunden zu sein; wobei der Speicher (1002) eine von dem mindestens einen Prozessor (1001) ausführbare Anweisung speichert, die, wenn sie von dem mindestens einen Prozessor (1001) ausgeführt wird, den mindestens einen Prozessor (1001) veranlasst, das Verfahren nach einem der Ansprüche 1 bis 7 durchzuführen.

9. Computerlesbares Speichermedium, das eine computerausführbare Anweisung speichert, die, wenn sie von einem Prozessor ausgeführt wird, den Prozessor veranlasst, das Verfahren nach einem der Ansprüche 1 bis 7 durchzuführen.

10. Computerprogramm, umfassend Anweisungen, die, wenn das Programm von einem Computer ausgeführt wird, den Computer veranlassen, das Verfahren nach einem der Ansprüche 1 bis 7 durchzuführen.

## Revendications

1. Procédé de gestion des données, appliqué à une base de données de traitement parallèle massif, MPPDB (Massive Parallel Processing Database), comprenant les éléments suivants,
l'acquisition d'informations relatives au comportement d'interrogation pour l'interrogation de la MPPDB par un utilisateur, sur la base d'une demande d'interrogation de l'utilisateur (S100) ; les informations sur le comportement d'interrogation comprennent une précision d'interrogation de l'utilisateur ;
la génération d'un modèle de prédiction de stockage par apprentissage automatique sur la base des informations relatives au comportement d'interrogation, et l'acquisition d'un état de stockage prévu de la MPPDB selon le modèle de prédiction de stockage (S200) ; l'état de stockage prévu comprend une quantité prévue de données à écrire dans la première partition de stockage ; et
**caractérisé en ce que** le procédé comprend en outre,
l'ajustement d'une partition de stockage dans la MPPDB en fonction de l'état de stockage prévu (S300), comprenant, la création d'une première partition de stockage dans la MPPDB en fonction de l'état de stockage prévu (S310) ; et
la détermination d'un intervalle de temps de la première partition de stockage en fonction de la taille de la quantité prévue de données à écrire dans la première partition de stockage et de la précision de l'interrogation (S320) ;
dans lequel la précision de l'interrogation indique si les données de l'intervalle de temps doivent être fréquemment interrogées par l'utilisateur ; toutes les données dont l'horodatage, compris dans l'intervalle de temps de la première partition de stockage sont écrites dans la première partition de stockage ; et l'intervalle de temps de la première partition de stockage comprend un temps qui va au-delà du temps actuel.

2. Procédé selon la revendication 1, dans lequel les informations relatives au comportement d'interrogation comprennent les fréquences d'interrogation de l'utilisateur pour les différentes partitions de stockage ; et
le procédé comprend en outre l'acquisition d'une fréquence d'interrogation prévue de l'utilisateur vers la première partition de stockage sur la base des fréquences d'interrogation et en fonction du modèle de prédiction de stockage (S410) ; et
la création d'un index pour la première partition de stockage en réponse à la fréquence d'interrogation prévue supérieure à un seuil de fréquence d'interrogation (S420) ;
dans lequel la fréquence d'interrogation est indicative de la fréquence d'interrogation des données par l'utilisateur.

3. Procédé selon la revendication 1, dans lequel les informations relatives au comportement d'interrogation comprennent un intervalle de temps de l'interrogation permettant à l'utilisateur d'interroger les données de la MPPDB ; et
l'ajustement de la partition de stockage dans la MPPDB sur la base de l'état de stockage prévu (S300) comprend la suppression des données dans une partition de stockage qui se situe en dehors de l'intervalle de temps de l'interrogation (S330).

4. Procédé selon la revendication 3, dans lequel la suppression des données dans la partition de stockage qui se situe en dehors de l'intervalle de temps de l'interrogation (S330) comprend l'une des opérations suivantes : la suppression de la partition de stockage en réponse à chaque horodatage des données dans la partition de stockage qui se situe en dehors de l'intervalle de temps de l'interrogation (S331) ; ou
la division de la partition de stockage en une partition expirée et une partition non expirée, en réponse à chaque horodatage d'une partie des données dans la partition de stockage qui se situe en dehors de l'intervalle de temps de l'interrogation, et la suppression de la partition expirée (S332), dans lequel chaque horodatage des données dans la partition expirée se situe en dehors de l'intervalle de temps de l'interrogation, et chaque horodatage des données dans la partition non expirée se situe à l'intérieur de l'intervalle de temps de l'interrogation.

5. Procédé selon la revendication 1, dans lequel les informations relatives au comportement d'interrogation comprennent les fréquences d'interrogation de l'utilisateur pour l'interrogation de différentes partitions de stockage et un intervalle de temps de l'interrogation permettant à l'utilisateur d'interroger les données de la MPPDB ; et
le procédé comprenant en outre,
la suppression des données dans une partition de stockage qui se situe en dehors de l'intervalle de temps de l'interrogation, en réponse à un taux d'utilisation de l'espace de stockage de la MPPDB inférieur à un premier seuil d'utilisation (S510) ;
la suppression d'un index d'une partition de stockage dont la fréquence d'interrogation prévue est inférieure au seuil de la fréquence d'interrogation, en réponse au taux d'utilisation de l'espace de stockage de la MPPDB qui est supérieur au premier seuil d'utilisation et inférieur à un deuxième seuil d'utilisation (S520) ;
l'exécution d'une opération d'échange de partitions sur une partition de stockage pour comprimer les données de la partition de stockage, en réponse au taux d'utilisation de l'espace de stockage de la MPPDB supérieur au deuxième seuil d'utilisation et inférieur au troisième seuil d'utilisation (S530) ; et
la suppression des données dans une partition de stockage dont la fréquence d'interrogation prévue est inférieure au seuil de la fréquence d'interrogation, en réponse au taux d'utilisation de l'espace de stockage de la MPPDB qui est supérieur au troisième seuil d'utilisation (S540).

6. Procédé selon la revendication 5, comprenant en outre l'exécution de l'opération d'échange de partitions vers une partition de stockage avec extension de données, et dans lequel l'exécution de l'opération d'échange de partitions vers la partition de stockage avec extension de données comprend,
la création d'une deuxième partition de stockage, la copie de chaque donnée de la partition de stockage avec extension de données vers la deuxième partition de stockage et la compression des données ; et
la mise à jour des informations d'association de partitions de la MPPDB, et la suppression de la partition de stockage avec extension de données.

7. Procédé selon la revendication 1, dans lequel la génération du modèle de prédiction de stockage par l'apprentissage automatique comprend :
l'information relative au comportement d'interrogation est considérée comme un ensemble d'apprentissage, et l'information relative au comportement d'interrogation est entraînée par apprentissage automatique sur la base d'une méthode d'empilement afin d'obtenir le modèle de prédiction du stockage.

8. Dispositif de gestion de données comprenant au moins un processeur (1001) et une mémoire (1002) configurée pour communiquer et se connecter avec l'au moins un processeur (1001) ; dans lequel la mémoire (1002) stocke une instruction exécutable par l'au moins un processeur (1001) qui, lorsqu'elle est exécutée par l'au moins un processeur (1001), amène l'au moins un processeur (1001) à mettre en œuvre le procédé selon l'une des revendications 1 à 7.

9. Support de stockage lisible par ordinateur, stockant une instruction exécutable par ordinateur qui, lorsque exécutée par un processeur, permet à ce dernier d'exécuter le procédé selon l'une quelconque des revendications 1 à 7.

10. Programme informatique comprenant des instructions qui, lorsque le programme est exécuté par un ordinateur, amènent l'ordinateur à mettre en œuvre le procédé selon l'une des revendications 1 à 7.
